(19) Europäisches Patentamt / European Patent Office / Office européen des brevets

(11) **EP 2 570 705 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(51) Int Cl.:
***B60B 7/00*** *(2006.01)*      ***B60B 27/00*** *(2006.01)*

(21) Anmeldenummer: **11181792.0**

(22) Anmeldetag: **19.09.2011**

(54) **Abstreifring und Abstreiflamelle**

Stripping ring and stripping blade

Segment racleur et lamelle de raclage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.03.2013 Patentblatt 2013/12**

(73) Patentinhaber: **Wärtsilä Switzerland Ltd.**
**8401 Winterthur (CH)**

(72) Erfinder:
• **Affolter, Samuel**
**8460 Marthalen (CH)**
• **Lusti, Hans Rudolf**
**8400 Winterthur (CH)**

(74) Vertreter: **TBK**
**Bavariaring 4-6**
**80336 München (DE)**

(56) Entgegenhaltungen:
**EP-A1- 0 318 349      WO-A1-92/13217**
**GB-A- 844 191      GB-A- 2 298 011**
**US-A- 2 692 152      US-A- 2 719 743**
**US-A- 3 521 890**

**Beschreibung**

Die vorliegende Erfindung betrifft einen Abstreifring zum Abstreifen einer Außenfläche einer axial relativ zum Abstreifring beweglichen Stange und bezieht sich auf eine Abstreiflamelle zur Montage am Innenumfang eines Abstreifrings. Ferner betrifft die vorliegende Erfindung eine Stopfbuchse mit Abstreifring für eine Brennkraftmaschine und eine Brennkraftmaschine, die mit einer derartigen Stopfbuchse ausgestattet ist.

Abstreifringe zum Abstreifen einer Außenfläche einer axial relativ zum Abstreifring beweglichen Stange sind weitläufig bekannt. Solche Abstreifringe dienen dazu, einen im jeweiligen Anwendungsfall vorhandenen Fluidfilm, beispielsweise einen Schmierölfilm, am Außenumfang dieser Stange abzustreifen. Insbesondere wird ein Abstreifring verwendet, um zwei Räume voneinander zu begrenzen, so dass das Schmieröl in einem Raum durch die Relativbewegung nicht in den anderen Raum überführt wird.

Abstreifringe für solche Anwendungen unterliegen einer gewissen Abnutzung aufgrund der relativen Bewegung zwischen Abstreifring und der zugeordneten Stange. Zur Aufrechterhaltung der Funktion des Abstreifrings werden einerseits optimierte Werkstoffkombinationen vorgeschlagen und besteht andererseits die Möglichkeit, die Funktionsweise des Abstreifrings durch spezielle geometrische Ausgestaltungen anzupassen.

Abstreifringe zum Abstreifen einer Außenfläche einer axial relativ zum Abstreifring beweglichen Stange, die aus mehreren Segmenten bestehen, die gegen die äußere Umfangsfläche der Stange getrieben werden, sind bereits bekannt.

Aus dem nächstliegenden Dokument US 2,719,743 ist eine Abstreiflamelle bekannt, die zur Montage am Innenumfang eines aus mindestens zwei Segmenten bestehenden Abstreifrings geeignet ist. Die Abstreiflamelle besteht aus einer entsprechenden Anzahl von Segmenten, die durch Lamellenunterbrechungen in der Umfangsrichtung gebildet werden, wobei die Endflächen der Abstreiflamellen, die die Lamellenunterbrechung begrenzen, relativ zur radialen Richtung der Abstreiflamelle abgeschrägte sind, und zwischen der Endfläche und einer Tangente, die an einem Punkt aufgetragen ist, der am Innenumfang der Abstreiflamelle und am Ende des Segments liegt, ein Abschrägungswinkel im Bereich von weniger als 90° vorgesehen ist.

Aus dem Dokument EP 0 318 349 A1 ist ein Abstreifring zum Abstreifen einer Außenfläche einer axial relativ zum Abstreifring beweglichen Stange bekannt, der einen Trägerring aus mindestens zwei getrennten Segmenten aufweist, wobei am Innenumfang des Trägerrings mindestens zwei Abstreiflamellen angeordnet sind. Die Endflächen der Abstreiflamellen, die die Lamellenunterbrechungen begrenzen, sind abgeschrägt.

Das Dokument WO 92/13217 zeigt einen Abstreifring, der einen mehrteiligen Trägerring aufweist, wobei die Segmente des Trägerrings Abstreiflamellen aufweisen. Die stumpf aneinanderstoßenden Segmente werden mittels einer Verbindungseinrichtung verbunden.

Es ist die Aufgabe der vorliegenden Erfindung, einen Abstreifring sowie eine Abstreiflamelle zu schaffen, die unter Berücksichtigung der Abnutzung eine verbesserte Abstreiffunktion zeigen. Des Weiteren soll eine mit einem derartigen Abstreifring ausgestattete Stopfbuchse und Brennkraftmaschine zur Verfügung gestellt werden.

Die Aufgabe wird erfindungsgemäß durch einen Abstreifring mit der Kombination der Merkmale von Anspruch 1 gelöst. Ferner wird diese Aufgabe durch eine Abstreiflamelle zur Montage am Innenumfang eines Abstreifrings nach Anspruch 5 gelöst. Eine entsprechend ausgestattete Stopfbuchse und Brennkraftmaschine wird mit Ansprüchen 8 und 10 beansprucht. Weitere vorteilhafte Weiterbildungen der Erfindung sind in den abhängigen Ansprüchen vorgeschlagen.

Gemäß einer bevorzugten Ausführungsform der vorliegenden Erfindung sind an jeder der Unterbrechungen des Trägerrings Endflächen der angrenzenden Segmente relativ zu der axialen Richtung des Trägerrings abgeschrägt und/oder gestuft ausgebildet. Gemäß dieser Ausführungsform können die erfindungsgemäß ausgeführten Unterbrechungen des Trägerrings mit einfachen Mitteln ausgebildet werden. Die Abschrägung der Endflächen der angrenzenden Segmente muss lediglich so gestaltet werden, dass in einer Projektion von der axialen Richtung des Trägerrings die angrenzenden Segmente einander überschneiden. Ferner kann eine gestufte Ausbildung im Bereich der Unterbrechungen des Trägerrings gewählt werden, so dass in einer Projektion von der axialen Richtung des Trägerrings die angrenzenden Segmente ebenfalls einander überschneiden. Eine Kombination aus abgeschrägter und gestufter Anordnung ist ebenfalls möglich und vorteilhaft.

Gemäß einer weiteren bevorzugten Ausführungsform der vorliegenden Erfindung sind die mindestens zwei Abstreiflamellen in axialer Richtung des Trägerrings voneinander beabstandet angeordnet und weist jede der Abstreiflamellen im Umfangsbereich von jeder der Unterbrechungen des Trägerrings eine Lamellenunterbrechung auf. Durch die spezielle Gestaltung des Abstreifrings mit den Unterbrechungen im Trägerring kann durch Vorsehen von zwei axial beabstandeten Abstreiflamellen die Funktion des erfindungsgemäßen Abstreifrings besonders vorteilhaft verwirklicht werden, da die im Abstreifring angeordneten Abstreiflamellen die Abstreiffunktion erfüllen und die Lamellenunterbrechungen im Umfangsbereich der Unterbrechungen des Trägerrings so angeordnet sind, dass ein Hindurchtreten des abzustreifenden Fluids durch die Unterbrechung verhindert wird, während eine Abnutzungskompensation gewährleistet ist.

Gemäß einer weiteren bevorzugten Ausführungsform der vorliegenden Erfindung sind die Lamellenunterbrechungen derart gestaltet, dass die Lamellenunterbrechungen, die einer Unterbrechung im Trägerring zugeordnet sind, in einer Projektion von der axialen Richtung des Trägerrings einander nicht überschneiden. Hierdurch wird ermöglicht, sowohl die spezielle Anordnung der Unterbrechungen des Trägerrings als auch die am Innenumfang angeordneten Abstreiflamellen mit den Lamellenunterbrechungen so einzurichten, dass bei axialer relativer Bewegung zwischen Abstreifring und der zugeordneten Stange der Durchtritt eines Fluidfilms durch die Unterbrechung im Trägerring verhindert wird.

Gemäß einer weiteren bevorzugten Ausführungsform der vorliegenden Erfindung wird der Abstreifring in an der Stange montiertem Zustand durch eine am Abstreifring wirkende Vorspanneinrichtung vorgespannt, so dass Innenumfangsflächen der Abstreiflamellen in Kontakt mit der Außenflächen der Stange gehalten werden. Hierdurch wird ein sicherer Kontakt der Abstreiflamellen an der abzustreifenden Außenfläche der Stange sichergestellt und kann gleichzeitig bei Abnutzung der Abstreiflamellen während des Betriebs selbsttätig eine Kompensation hierfür unter Berücksichtigung der Unterbrechungen im Trägerring herbeigeführt werden.

Abstreiflamellen zur Montage am Innenumfang eines Abstreifrings unterliegen im Betrieb einer Abnutzung. Durch das Vorsehen von Abstreifringen, die aus mindestens zwei Segmenten bestehen, kann die Umfangsveränderung aufgrund der Abnutzung der Abstreiflamelle kompensiert werden. Das Ziel der Anwendung einer Abstreiflamelle im oben genannten Abstreifring ist es, einen möglichst großen Anteil des äußeren Umfangs der Stange abzustreifen. Prinzipiell können hierfür ausreichend große Abstände an den gegenüberliegenden Enden in Umfangsrichtung der Abstreiflamellensegmente vorgesehen werden. Daraus ergibt sich jedoch, dass bei Inbetriebnahme einer unbenutzten Abstreiflamelle ein besonders großer Abstand in Umfangsrichtung vorliegen würde, so dass die Funktion des Abstreifrings nicht optimal erfüllt werden kann. Die Verringerung dieses Abstands führt jedoch zu weiteren Problemen insbesondere bei fortschreitender Abnutzung.

Durch die erfindungsgemäße Abstreiflamelle, deren Endflächen, die die Lamellenunterbrechungen begrenzen, relativ zur radialen Richtung der Abstreiflamelle abgeschrägt sind, kann im Betrieb die abzustreifende Umfangsfläche weitestgehend beibehalten werden.

Gemäß der vorliegenden Erfindung ist bei der Abstreiflamelle zwischen der Endfläche und einer Tangente, die an einem Punkt aufgetragen ist, der am Innenumfang der Abstreiflamelle und am Ende des Segments liegt, ein Abschrägungswinkel im Bereich von weniger als 90° vorgesehen. Dabei beträgt bei einer Anzahl der die Abstreiflamelle bildenden Segmente von zwei der Abschrägungswinkel 0° und wird graduell höher bei größerer Anzahl der die Abstreiflamelle bildenden Segmente eingerichtet. Die Einrichtung des Abschrägungswinkels mit einem Winkel von weniger als 90° zeigt bereits die Vorteile, dass weder ein übermäßig großer Abstand zwischen den Segmenten der Abstreiflamelle bei Betriebsaufnahme noch Probleme bei fortschreitender Abnutzung auftreten.

Der Abschrägungswinkel ist abweichend von einem sich bei konzentrischer Abnutzung ergebenden optimalen theoretischen Abschrägungswinkel festgelegt. Eine theoretische konzentrische Abnutzung hat zur Folge, dass alle Innenumfangsbereiche der Abstreiflamelle, die in Kontakt mit der Außenumfangsfläche der Stange sind, gleichmäßig abgenutzt werden. Hierdurch ergibt sich ein theoretischer Abschrägungswinkel aufgrund von geometrischen Betrachtungen. Erfindungsgemäß ist jedoch der Abschrägungswinkel abweichend von dem sich ergebenden errechenbaren theoretischen Abschrägungswinkel festgelegt, der sich bei konzentrischer Abnutzung ergibt. Hierdurch werden die tatsächlichen Abnutzungsverhältnisse berücksichtigt, so dass sich für die in die Praxis umgesetzte Abstreiflamelle eine weitergehend verbesserte Funktionalität ergibt.

Gemäß einer weiteren bevorzugten Ausführungsform der vorliegenden Erfindung wird der Abschrägungswinkel durch Multiplikation eines theoretischen Winkels, der unter der Annahme einer konzentrischen Abnutzung am Innenumfang der Abstreiflamelle berechnet wird, mit einem Korrekturfaktor festgelegt, wobei der Korrekturfaktor eine exzentrische Abnutzung am Innenumfang der Abstreiflamelle berücksichtigt. Durch einen solchen Korrekturfaktor kann abweichend von dem sich theoretisch ergebenden und berechenbaren Winkel eine Abstreiflamelle zur Verfügung gestellt werden, die optimal an die tatsächlichen Abnutzungsverhältnisse angepasst ist. Insbesondere ist bevorzugt der Abschrägungswinkel, der an der Abstreiflamelle vorgesehen ist, größer oder gleich dem korrigierten Abschrägungswinkel und kleiner oder gleich dem theoretischen Abschrägungswinkel.

Gemäß einer weiteren bevorzugten Ausführungsform der vorliegenden Erfindung wird der Korrekturfaktor unter Berücksichtigung des Abstands der die Abstreiflamelle bildenden Segmente in Umfangsrichtung der Abstreiflamelle festgelegt. In verschiedenen Anwendungsfällen können unterschiedliche Abstände zwischen den Segmenten der Abstreiflamelle zugelassen oder sogar erforderlich sein. Bei besonders großem Abstand muss diesem Sachverhalt Rechnung getragen werden, indem der Korrekturfaktor an die geometrisch-theoretischen Vorgaben und die praktische Annahme einer exzentrischen Abnutzung angepasst wird.

Gemäß einer weiteren bevorzugten Ausführungsform der vorliegenden Erfindung beträgt bei einer Anzahl die Abstreiflamelle bildenden Segmente von zwei der Korrekturfaktor von 0 und nähert sich dieser bei Vergrößerung der Anzahl der die Abstreiflamelle bildenden Segmente an 1 an. Es hat sich herausgestellt, dass die Unterschiede zwischen konzentrischer und exzentrischer Abnutzung bei großer Anzahl der die Lamelle bildenden Segmente geringer sind als bspw. bei einer Anzahl der Segmente von zwei.

Gemäß der vorliegenden Erfindung wird ein Abstreifring der vorstehend diskutierten Art vorgeschlagen, der mindestens zwei Abstreiflamellen aufweist, die vorstehend diskutiert sind. Dabei sind die Anzahl und die Position der Lamellenunterbrechungen jeder Abstreiflamelle insbesondere in Umfangsrichtung an Anzahl und Position der Unterbrechungen des Trägerrings angepasst. Das heißt, dass der Abstreifring zumindest zwei Abstreiflamellen aufweist, bei denen jede Abstreiflamelle aus einer entsprechenden Anzahl von Segmenten besteht, die durch Lamellenunterbrechungen in Umfangsrichtung gebildet werden. Die Endflächen der Abstreiflamellen, die die Lamellenunterbrechungen begrenzen, sind relativ zur radialen Richtung der Abstreiflamelle abgeschrägt, um eine durch Abnutzung bedingte Änderung der Abstreiffläche der Abstreiflamelle zumindest teilweise auszugleichen. Dabei sind die Lamellenunterbrechungen bezogen auf die Umfangposition im Bereich der Unterbrechungen im Trägerring des Abstreifrings angeordnet.

Hierdurch ergibt sich ein Abstreifring, bei welchem die Abnutzung der Abstreiflamellen dahingehend berücksichtigt wird, dass die abzustreifende Fläche der zugeordneten Stange optimiert wird und gleichzeitig verhindert wird, dass durch einen Spalt, der sich durch die Unterbrechungen zwischen den Segmenten des Trägerrings ergibt, abzustreifendes Fluid bei Relativbewegung zwischen Abstreifring und der zugeordneten Stange hindurchgeführt wird. Gleichzeitig wird durch die optionale Berücksichtigung von exzentrischer Abnutzung der Lamellen die Funktionalität des Abstreifrings optimiert. Abhängig von der axial beabstandeten Position der zumindest zwei Abstreiflamellen sind die Lamellenunterbrechungen derart angeordnet und eingerichtet, dass diese sich in einer axialen Projektion des Abstreifrings sich an keiner Stelle überschneiden.

Erfindungsgemäß ist ferner eine Stopfbuchse einer Brennkraftmaschine, insbesondere eines Zweitakt-Großdieselmotors, mit mindestens einem Zylinder vorgesehen, wobei bei der Brennkraftmaschine ein Kolben hin- und herbewegbar angeordnet ist, der mittels einer als Kolbenstange ausgebildeten Stange beispielsweise mit einem Kreuzkopf verbunden ist. Die Stopfbuchse der vorliegenden Erfindung dient der Durchführung der Stange von einem Raum zu einem anderen Raum, insbesondere von einem Luftreceiverraum in einen Kurbelraum. Die Erfindungsgemäße Stopfbuchse weist mindestens einen Abstreifring der vorstehend diskutierten Art auf, wobei der Abstreifring insbesondere Abstreiflamellen der vorstehend diskutierten Art aufweist.

Gemäß einer weiteren bevorzugten Ausführungsform der vorliegenden Erfindung ist bei der Stopfbuchse eine Vorspanneinrichtung am Außenumfang des Trägerrings vorgesehen, die die am Innenumfang des Trägerrings vorgesehenen Abstreiflamellen gegen die Außenfläche der Stange spannt, so dass bei gradueller Abnutzung der Abstreiflamellen die Innenflächen von diesen durch die Vorspanneinrichtung in Kontakt mit der Außenfläche der Stange gehalten werden. Hierdurch wird die korrekte Funktion der Stopfbuchse mit dem Abstreifring herbeigeführt und gleichzeitig eine selbsttätige Kompensierung der veränderten geometrischen Verhältnisse unter Berücksichtigung der konzentrischen Abnutzung an den Abstreiflamellen bewirkt.

Erfindungsgemäß ist ferner eine Brennkraftmaschine, insbesondere ein Zweitakt-Großdieselmotor vorgesehen, der eine als Kolbenstange ausgeführte Stange aufweist, an der zur Durchführung der Kolbenstange zwischen zwei Räumen, insbesondere zwischen einem Luftreceiverraum und einem Kurbelraum, eine Stopfbuchse der vorstehend diskutierten Art vorgesehen ist.

Insgesamt entfaltet die vorliegende Erfindung ihre Wirkung in Anwendung auf eine Brennkraftmaschine, die besonderen Lebensdaueranforderungen unterliegt, während gleichzeitig der Bedarf von Wartungsarbeiten minimiert werden kann.

Die Erfindung ist jedoch nicht auf die Anwendung auf eine Brennkraftmaschine beschränkt, sondern sowohl der Abstreifring als auch die Abstreiflamelle ist für jeden technischen Anwendungsfall nutzbar, bei welchem das Abstreifen einer Außenfläche einer axial relativ zum Abstreifring bzw. relativ zur Abstreiflamelle beweglichen Stange erforderlich ist, insbesondere um zwei Räume voneinander zu trennen und ein an der Stange anhaftendes Fluid, insbesondere Schmieröl, am Übertritt von einem Raum zum anderen zu hindern. Beispiele hierfür können Hydraulik-Linearantriebe, Kolbenverdichter, Pumpen und andere Stellglieder sein.

Kurzbeschreibung der Zeichnungen

Fig. 1 zeigt einen Abstreifring mit zwei Abstreiflamellen in einer dreidimensionalen Ansicht gemäß einem ersten Ausführungsbeispiel.

Fig. 2 zeigt einen Abstreifring mit zwei Abstreiflamellen in einer dreidimensionalen Ansicht gemäß einer Abwandlung des ersten Ausführungsbeispiels.

Fig. 3a zeigt eine Abstreiflamelle gemäß dem zweiten Ausführungsbeispiel, die in einem Abstreifring eingebaut ist.

Fig. 3b zeigt einen Ausschnitt von Fig. 3a im Bereich der Unterbrechung im Trägerring.

Fig. 4 zeigt in einem Diagramm die geometrischen Verhältnisse an der Abstreiflamelle gemäß der vorliegenden Erfindung in einem spezifischen Beispiel.

Fig. 5 zeigt in einem Diagramm die geometrischen Verhältnisse an einer Abstreiflamelle bei exzentrischer Abnutzung einer Abstreiflamelle.

Fig. 6 zeigt eine Querschnittsansicht einer Brennkraftmaschine im Bereich des Kreuzkopfs mit einer Stopfbuchse gemäß der vorliegenden Erfindung.

Ausführungsbeispiele der vorliegenden Erfindung werden im Folgenden unter Bezugnahme auf die Figuren erläutert.

Erstes Ausführungsbeispiel

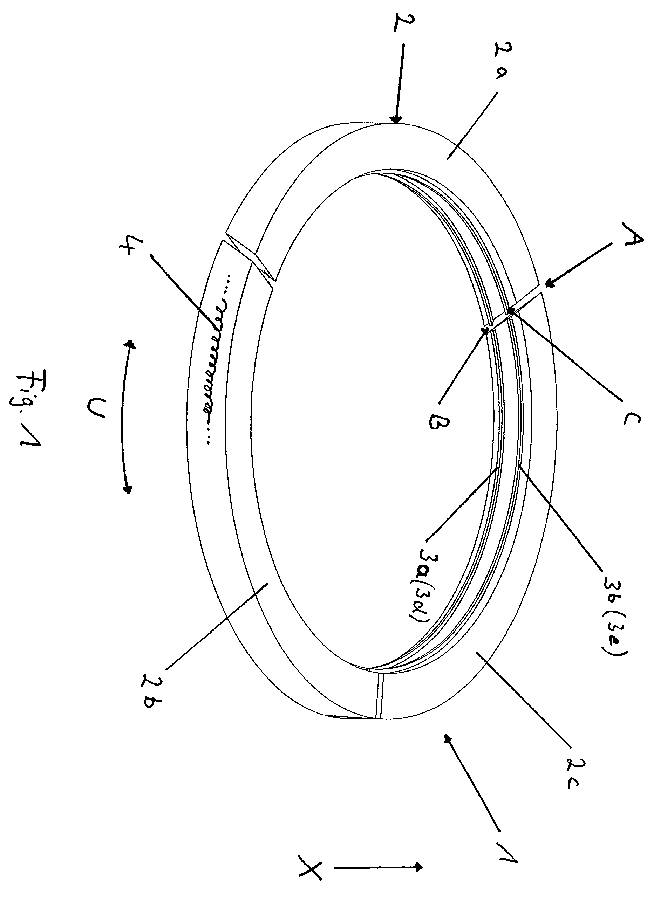

Das erste Ausführungsbeispiel der vorliegenden Erfindung wird unter Bezugnahme auf Fig. 1 beschrieben. Fig. 1 zeigt einen Abstreifring 1 in einer dreidimensionalen Ansicht. Der Abstreifring 1 weist einen Trägerring 2 auf, der im gezeigten Ausführungsbeispiel aus drei Segmenten 2a, 2b, 2c besteht. Benachbarte Segmente des Trägerrings 2 sind durch eine Unterbrechung voneinander getrennt, wie in Fig. 1 mit dem Bezugszeichen A angedeutet ist. Der Trägerring 2, der aus den Segmenten besteht, hat einen kreisförmigen Querschnitt. Die Unterbrechungen A bilden Spalte zwischen den einzelnen Segmenten des Trägerrings 2.
In Fig. 1 und den weiteren Figuren ist die axiale Richtung des Abstreifrings mit einem Pfeil X angedeutet. Ferner ist die Umfangsrichtung des Abstreifrings in den Figuren durch einen entsprechenden Pfeil U angedeutet. Insbesondere verläuft die axiale Richtung parallel zu der Symmetrieachse des Trägerrings 2. Die Umfangsrichtung verläuft entlang dem Umfang des kreisförmigen Abstreifrings.
In Fig. 1 ist der Abstreifring isoliert dargestellt, nämlich im nicht montierten Zustand an der zugeordneten Stange, um die Darstellung zu verdeutlichen.
Am Innenumfang, insbesondere in der inneren Fläche des Abstreifrings 1, genauer gesagt an der inneren Fläche der den Trägerring 2 bildenden Segmente sind im gezeigten Ausführungsbeispiel axial voneinander beabstandete Abstreiflamellen 3a und 3b vorgesehen. Die Abstreiflamellen 3a, 3b sind aus Segmenten ausgebildet, wobei die Anzahl der die Abstreiflamellen bildenden Segmente dieselbe ist wie die Anzahl der den Trägerring 2 bildenden Segmente. Die Segmente der Abstreiflamellen 3a, 3b sind durch Lamellenunterbrechungen B bzw. C voneinander getrennt. Die Lamellenunterbrechungen B, C sind relativ zur Umfangsrichtung des Trägerrings an den Positionen vorgesehen, die den Unterbrechungen A im Trägerring 2 entsprechen.
Die Abstreiflamellen 3a, 3b sind im gezeigten Ausführungsbeispiel in Nuten eingesetzt, die an der inneren Umfangsfläche des Trägerrings ausgebildet sind. Die Abstreiflamellen 3a, 3b sind dabei derart in die Nuten eingesetzt, dass diese sich im Betrieb des Abstreifrings in Umfangsrichtung nicht bewegen können.
Alternativ können die Abstreiflamellen 3a, 3b direkt auf die innere Umfangsfläche des Trägerrings 2 aufgebracht werden, wie bspw. durch Schweißen oder ein anderes Verfahren. Ferner ist es möglich, die Abstreiflamellen 3a, 3b durch spanabhebende Verfahren am Innenumfang des Trägerrings 2 zu gestalten.
Fig. 1 zeigt den Trägerring 2 mit drei Unterbrechungen A. Die Unterbrechungen A im Trägerring 2 sind abgeschrägt ausgebildet, so dass in einer Projektion von der axialen Richtung die Segmente 2a, 2b, 2c, die den Trägerring 2 ausbilden, einander überschneiden. Die Abstreiflamellen 3a, 3b sind so gestaltet, dass die Enden der Segmente der Abstreiflamellen 3a, 3b an den Lamellenunterbrechungen B, C geringfügig in die Unterbrechung A in dem Trägerring 2 hineinragen, wie Fig. 1 entnehmbar ist.
Die Lamellenunterbrechungen B, C, die zwischen den entsprechenden Abstreiflamellen 3a bzw. 3b vorgesehen sind, sind unter Berücksichtigung der Ausgestaltung der Unterbrechungen A im Trägerring 2 so angeordnet, dass die Lamellenunterbrechungen B bzw. C, die einer Unterbrechung A im Trägerring 2 zugeordnet sind, in einer Projektion von der axialen Richtung des Trägerrings 2 einander nicht überschneiden.
Der in Fig. 1 gezeigte Abstreifring 1 wird durch eine Vorspanneinrichtung, bspw. eine Feder 4, die am Außenumfang des Trägerrings 2 vorgesehen ist, in radialer Richtung nach innen vorgespannt. Im montierten Zustand liegen die Segmente 2a, 2b, 2c des Trägerrings 2 mit den vorgesehenen Abstreiflamellen 3a, 3b am Außenumfang einer zugeordneten Stange an und wird durch die Feder 4 eine Vorspannkraft auf die Segmente aufgebracht, so dass die Abstreiflamellen 3a, 3b mit einer vorbestimmten Kraft an die Außenfläche der Stange getrieben werden. Im eingebauten Zustand wird eine relative axiale Bewegung zwischen Abstreifring 1 und der zugeordneten Stange ermöglicht, so dass die am Innenumfang des Trägerrings 2 vorgesehenen Lamellen 3a, 3b am Außenumfang der zugeordneten Stange gleiten. Dabei kann der Abstreifring 1 stationär gehalten werden, während die Stange relativ zum Abstreifring 1 bewegt wird, wohingegen ebenfalls die Stange stationär gehalten werden kann und der Abstreifring 1 relativ zur Stange axial bewegbar ist. Eine Kombination von den beiden vorstehend genannten Situationen ist ebenfalls möglich, solange eine relative Bewegung zwischen Abstreifring 1 und der zugeordneten Stange zugelassen wird.

Eine von der Feder 4 abweichende Vorspanneinrichtung kann vorgesehen werden, solange die Funktion erfüllt wird, dass die Segmente des Trägerrings 2 nach innen vorgespannt werden können.

Der gezeigte Abstreifring 1 wird eingesetzt, um eine Trennung von zwei Räumen herbeizuführen, während die zugeordnete Stange innerhalb des Abstreifrings 1 auf die vorstehend angegebene Weise relativ zum Abstreifring beweglich angeordnet ist. Es ist dabei unerheblich, ob Abstreifring 1 oder Stange stationär sind, da lediglich die relative Beweglichkeit zwischen Abstreifring 1 und Stange gewährleistet sein muss. Die Räume müssen keine geschlossenen Räume darstellen und können auch mit der Umgebung in Verbindung stehen.

Insbesondere wird der Abstreifring 1 dazu verwendet, ein an der Stange anhaftendes Fluid, das in einem der Räume auf die Außenfläche der Stange aufgebracht wird, durch die relative axiale Bewegung zwischen Abstreifring 1 und Stange abzustreifen und ein Hindurchtreten des Fluidfilms, der an Stange vorhanden ist, in den anderen Raum zu unterbinden. Solche Anwendungen umfassen hydraulische Stellglieder, Hydraulikanwendungen, Kompressoren und insbesondere Anwendungen bei Brennkraftmaschinen, bei denen eine als Kolbenstange ausgebildete Stange in einem Raum, nämlich beispielsweise einem Kurbelraum mit einem Schmierölfilm versehen wird, während der Durchtritt des Schmierölfilms in den anderen Raum, nämlich beispielsweise einen Luftreceiverraum der Brennkraftmaschine, verhindert werden soll.

Erfindungsgemäß ist der Abstreifring 1 mit den speziell ausgestalteten Unterbrechungen A versehen, die folgende Wirkung haben:

Im Betrieb des Abstreifrings 1 ergibt sich durch die Relativbewegung zwischen Abstreifring 1 und der zugeordneten Stange durch den Kontakt zwischen Abstreiflamellen 3a, 3b und der Außenfläche der Stange eine Abnutzung. Durch diese Abnutzung wird Material von den Lamellen 3a, 3b abgetragen, so dass die geometrischen Abmessungen der Abstreiflamellen 3a, 3b sich im Betrieb verändern. Durch die am Außenumfang des Trägerrings 2 vorgesehene Vorspanneinrichtung 4 wird eine Abnutzung der Abstreiflamellen 3a, 3b ausgeglichen, indem durch die radial nach innen wirkende Kraft der Vorspanneinrichtung 4 die Abstreiflamellen 3a, 3b auch nach einer gewissen Abnutzung in Kontakt mit der Außenfläche der zugeordneten Stange gehalten werden. Die Unterbrechungen zwischen den Segmenten 2a, 2b, 2c, die den Trägerring 2 bilden, sowie die Lamellenunterbrechungen B, C, die zwischen den die Abstreiflamellen 3a, 3b bildenden Segmente Unterbrechungen bilden, dienen somit dazu, eine radial nach innen gerichtete Bewegung bei Abnutzung der Abstreiflamellen 3a, 3b zu ermöglichen, da bei einer solchen Bewegung der Außenumfang des Trägerrings 2 insgesamt verkleinert wird. Die Verkleinerung des Außenumfangs des Trägerrings 2 kann fortschreiten, bis die Unterbrechungen A zwischen den Segmenten 2a, 2b, 2c des Trägerrings 2 geschlossen sind.

Durch die spezielle Ausgestaltung der Unterbrechungen A, nämlich in einer abgeschrägten Form, so dass die Segmente 2a, 2b, 2c, die den Trägerring 2 bilden, sich in einer axialen Projektion überschneiden, wird in Zusammenwirkung mit den zwei Lamellen 3a, 3b bewirkt, dass ein an der zugeordneten Stange anhaftender Fluidfilm nicht durch die Unterbrechungen A hindurchgeführt wird. Dadurch wird insgesamt die Funktion des Abstreifrings 1 verbessert, die grundsätzlich darin besteht, ein Hindurchtreten des Fluidfilms, der an der zugeordneten Stange haftet, von dem einen Raum zu dem anderen Raum, die von dem Abstreifring 1 getrennt sind, zu unterbinden.

Durch die spezielle Anordnung der zwei Abstreiflamellen 3a, 3b mit den Lamellenunterbrechungen B, C, die an den Positionen angeordnet sind, die den Positionen der Unterbrechungen A im Trägerring 2 entsprechen, wird diese Funktion weitergehend unterstützt.

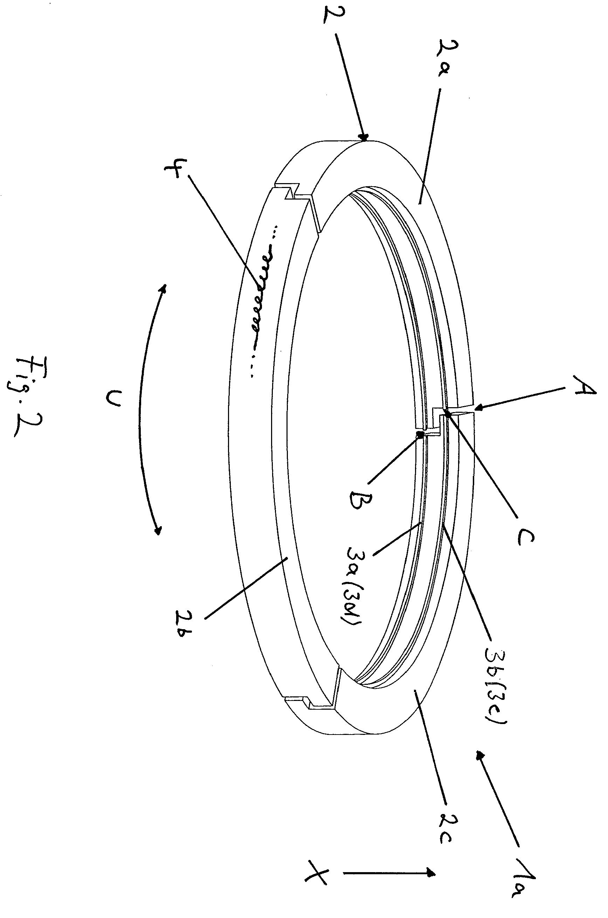

Eine Abwandlung des ersten Ausführungsbeispiels wird im Folgenden unter Bezugnahme auf Fig. 2 beschrieben.

Der Aufbau des Abstreifrings 1a von Fig. 2 ist dem Aufbau des Abstreifrings von Fig. 1 in wesentlichen Teilen ähnlich. Die Unterbrechung A im Trägerring 2 ist jedoch abgewandelt ausgebildet.

Wie in Fig. 2 ersichtlich ist, ist die Unterbrechung A im Trägering 2 gestuft ausgebildet, so dass zwischen den Segmenten 2a, 2b, 2c, die den Trägerring 2 bilden, in Umfangsrichtung ein Spalt vorgesehen ist, während die Endbereiche der Segmente in Umfangsrichtung gestuft ausgebildet sind. Insbesondere wird an den Unterbrechungen A jedes Segment in zwei Stufen geschnitten, so dass an jeder der Unterbrechungen A des Trägerrings 2 in einer Projektion von der axialen Richtung des Trägerrings 2 die angrenzenden Segmente einander überschneiden. Wie Fig. 2 entnehmbar ist, sind die zwei Abstreiflamellen 3a, 3b axial beabstandet so angeordnet, dass jede der Abstreiflamellen 3a, 3b einer der Stufen an den Unterbrechungen A zugeordnet ist. Genauer gesagt erstrecken sich die Segmente der Abstreiflamellen 3a, 3b mit unterschiedlichen Umfangserstreckungen aufgrund der abgestuften Ausbildungen der Unterbrechung A im Trägering 2. Auch bei dieser Abwandlung ragen die Enden der Segmente, die die Abstreiflamellen 3a, 3b bilden, geringfügig in die Unterbrechung A des Trägerrings 2 hinein.

Mit der Anordnung von Fig. 2 werden im Wesentlichen dieselben Wirkungen erzielt, die auch mit der Anordnung von Fig. 1 erzielt werden.

In Fig. 2 sind die gestuften Enden der Segmente an den Unterbrechungen A so gezeigt, dass die angrenzenden Segmente des Trägerrings 2 auch in axialer Richtung voneinander beabstandet sind. Durch eine solche Beabstandung kann die problemlose Kompensation des Durchmessers aufgrund der Abnutzung der Lamellen 3a, 3b aufrechterhalten werden.

In einer weitergehenden Abwandlung können jedoch die gestuften Enden der angrenzenden Segmente an den Unterbrechungen A axial in Anlage sein, so dass bei Veränderung des Abstands in Umfangsrichtung an den Unterbrechungen A die in Anlage befindlichen Flächen gleiten. Durch eine solche Anordnung kann eine verbesserte Ausrichtungsstabilität des gesamten Abstreifrings herbeigeführt werden.

Zweites Ausführungsbeispiel

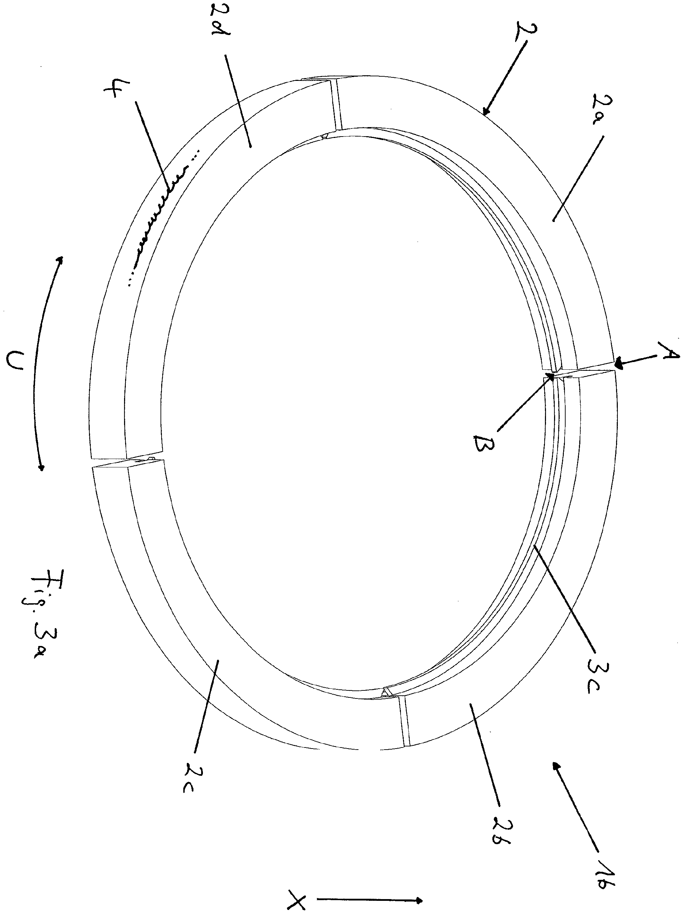

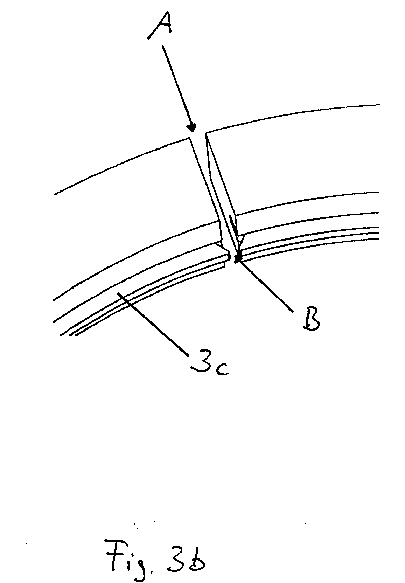

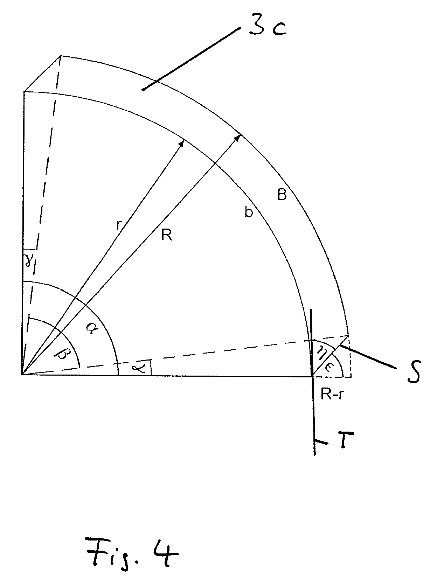

Ein zweites Ausführungsbeispiel der vorliegenden Erfindung wird auf der Grundlage von Fig. 3a, Fig. 3b und Fig. 4 beschrieben. Das zweite Ausführungsbeispiel betrifft eine Abstreiflamelle 3c. Die Abstreiflamelle 3c des zweiten Ausführungsbeispiels ist geeignet zum Einbau in einem Abstreifring 1b, der aus mindestens zwei Segmenten besteht. Zusätzlich ist die Abstreiflamelle 3c des zweiten Ausführungsbeispiels geeignet zum Einbau in einem Abstreifring 1, 1a, der im ersten Ausführungsbeispiel beschrieben ist.

Zur Erläuterung des zweiten Ausführungsbeispiels wird die Anwendung der dargestellten Abstreiflamelle 3c auf einen Abstreifring 1b erklärt, der aus vier Segmenten 2a, 2b, 2c, 2d besteht. In Fig. 3a zeigt hierzu eine Abstreiflamelle 3c, die in einem Abstreifring 1b eingebaut ist, der aus vier Segmenten besteht. Die Funktion des Abstreifrings 1b des zweiten Ausführungsbeispiels ist im Wesentlichen dieselbe wie diejenige des Abstreifrings 1, 1a des ersten Ausführungsbeispiels.

In Fig. 3a ist der Abstreifring 1b dargestellt, der einen Trägerring 2 aufweist, der durch Unterbrechungen A in vier Segmente 2a, 2b, 2c, 2d unterteilt ist. In diesen Segmenten ist mindestens eine Abstreiflamelle 3c vorgesehen, die in Übereinstimmung mit der Gestaltung der Segmente des Trägerrings 2 ausgestaltet ist. Insbesondere wird die Abstreiflamelle 3c mit derselben Anzahl von durch Lamellenunterbrechungen B unterteilten Segmenten zur Verfügung gestellt wie diejenige des Trägerrings, der für den Abstreifring 1b vorgesehen ist. In Fig. 3a beträgt die Anzahl der Segmente jeweils vier. Hier ist ebenfalls eine Vorspanneinrichtung 4 am Außenumfang des Trägerrings 2 vorgesehen, die beispielhaft als Feder ausgestaltet sein kann.

In Fig. 3b ist ein Ausschnitt von Fig. 3a im Bereich der Unterbrechung A im Trägerring dargestellt. Hier ist die Abschrägung der Endflächen der Segmente der Abstreiflamelle 3c, die einander im Bereich der Lamellenunterbrechung B gegenüberstehen oder benachbart sind, genauer erkennbar.

In dem in Fig. 4 gezeigten Beispiel ist die erfindungsgemäße Abstreiflamelle 3c gezeigt, die in Umfangsrichtung U eine Erstreckung von $\alpha = 90°$ aufweist.

Das zweite Ausführungsbeispiel betrifft die spezielle Ausgestaltung der Enden der Segmente, aus denen die Abstreiflamelle 3c aufgebaut ist. Obwohl im vorliegenden Beispiel, das in Fig. 4 gezeigt ist, nur ein Segment der Abstreiflamelle 3c gezeigt ist, ist klar, dass die Abstreiflamelle 3c, die zum Einbau in einen aus vier Segmenten bestehenden Abstreifring 1b geeignet ist, der in Fig. 3a gezeigt ist, aus vier Segmenten der in Fig. 4 gezeigten Art bestehen.

Fig. 4 zeigt die Winkelverhältnisse der erfindungsgemäßen Abstreiflamelle 3c, die im Folgenden erläutert werden. Die Enden des in Fig. 4 gezeigten Segments der Abstreiflamelle 3c sind abweichend von der radialen Richtung geschnitten. Insbesondere sind die Enden des in Fig. 4 gezeigten Segments mit einem Winkel n geschnitten, der zwischen einer Tangente T, die am Innenumfang des Segments und am Endpunkt von diesem angelegt wird, und der Schnittfläche S gebildet wird. Hieraus ergibt sich, dass bei einem Winkel $\alpha = 90°$ der Erstreckungswinkel der Außenfläche des Segments $\beta < \alpha$ ist. Im Folgenden wird das Grundkonzept Bestimmung des Winkels n zum Erhalten der erfindungsgemäßen Abstreiflamelle 3c erläutert.

Bei Verwendung einer Abstreiflamelle 3c, die aus vier der in Fig. 4 gezeigten Segmente besteht, ist bei Betriebsaufnahme der Innenumfang mit einer Bogenlänge b des Segments in Kontakt mit der Außenfläche der zugeordneten Stange. Dieser Kreisbogen hat den Radius r. Bei fortschreitender Abnutzung wird Material von der Innenfläche jedes Segments der Abstreiflamelle 3c abgetragen. Somit bewegt sich die Innenfläche in Richtung der Außenfläche des Segments, die mit einer Bogenlänge B eingerichtet ist. In dem Fall, dass die Endflächen S der Segmente in radialer Richtung geschnitten wären, wie es bei diesen Anwendungen bisher üblich ist, würde sich bei Abnutzung am Innenumfang der Segmente der Abstreiflamelle 3c eine Veränderung der Kontaktfläche zwischen Abstreiflamelle 3c und Außenfläche der zugeordneten Stange ergeben. Insbesondere würde sich bei Abnutzung die Umfangserstreckung bzw. die Bogenlänge der Kontaktfläche für jedes Segment vergrößern, so dass bisher dieser Veränderung mit einem ausreichenden Spalt zwischen den Segmenten der Abstreiflamelle Rechnung getragen werden musste.

Ein solcher Spalt verursacht jedoch, dass an der Stange anhaftendes Fluid, wie z.B. Schmieröl, durch die axiale Relativbewegung zwischen Abstreiflamelle 3c und der zugeordneten Stange hindurchgeleitet würde. Durch die erfindungsgemäße Anordnung mit den abgeschrägten Enden der Segmente der Abstreiflamelle 3c kann die Beabstandung zwischen den Segmenten, die die Abstreiflamelle 3c bilden, minimiert werden. Außerdem kann eine gravierende Änderung der Spaltabmessungen durch die erfindungsgemäße Anordnung verhindert werden.

Im Folgenden wird genauer auf die Bestimmung des Winkels ε eingegangen.

Fig. 4 zeigt einen Winkel γ, der an beidseitig vom Winkel γ zu subtrahieren ist, so dass auf Grundlage der in Fig. 4 gezeigten geometrischen Konstruktion der Wert der Bogenlänge b am Innenumfang gleich dem Wert der Bogenlänge B am Außenumfang wird. Die Bogenlängen der äußeren und inneren Umfangserstreckung des Segments ergeben sich aus

$$b = \pi \times 2r \times \alpha \, / \, 360° \qquad (1)$$

$$B = \pi \times 2R \times \beta \, / \, 360° \qquad (2)$$

Bei vier Lamellensegmenten ergibt sich für α ein Wert von 90°, wenn angenommen wird, dass die Enden der angrenzenden Segmente der Abstreiflamelle 3c aneinander angrenzen. Unter der beispielhaften Annahme für die Radien r = 132 mm und R = 142 mm ergibt sich

$$\beta = 132 \times 90° \, / \, 142 = 83{,}66° \qquad (3)$$

Der Zusammenhang der Winkelverhältnisse lässt sich wie folgt darstellen:

$$\alpha - 2\gamma = \beta \qquad (4)$$

Der Winkel ε, der in Fig. 4 eingezeichnet ist, ergibt sich somit zu

$$\varepsilon = \arctan (\Delta b/(R-r)) =$$
$$\arctan [(\pi \times 2R \times \gamma)/(360° \, (R-r))] \qquad (5)$$

Es ergibt sich für den Winkel γ ein Wert von 3,17° unter Berücksichtigung des numerischen Beispiels, bei dem b und B gleich Werte haben müssen.

Somit ergibt sich im vorliegenden Beispiel für ε ein Wert von 38,17° aus (5). Basierend auf der Annahme, dass

$$\eta = 90° - \varepsilon \qquad (6)$$

gilt, ergibt sich ein Wert von 51,9° für eine aus vier Segmenten bestehende Abstreiflamelle 3c, bei der die Enden der Segmente bei Betriebsaufnahme aneinander anliegen und bei der die Werte der Bogenlängen von B und b bei Abnutzung am Innenumfang gleichgehalten werden sollen, wobei dieser Winkel als $\eta_{konz}$ bezeichnet wird, da dieser Winkel unter der Annahme einer idealen konzentrischen Abnutzung an der Abstreiflamelle 3c errechnet.

Im vorliegenden Beispiel ergibt sich ein Winkel von n = $\eta_{konz}$ = 51,9, der zwischen der Tangente T, die am Innenumfang des Segments und am Ende desselben aufgetragen wird, und der abgeschrägten Endfläche S gemessen wird. Ein Abstreifring, in welchem aus vier Segmenten bestehende Abstreiflamelle eingesetzt wird, die mit einem Winkel n = 51,9° an den Enden der Segmente abgeschrägt ausgeführt ist, führt im Betrieb und insbesondere bei Abnutzung der inneren Umfangsfläche der Segmente der Abstreiflamelle 3c zu einer Konstanthaltung der Umfangserstreckung der Innenumfangsfläche der Abstreiflamelle. Hierdurch kann eine übermäßig groß ausgestalteter Spalt zwischen den Segmenten vermieden werden, wodurch der Durchtritt des abzustreifenden Fluids zwischen den abzugrenzenden Räumen minimiert werden kann.

Das vorliegende Ausführungsbeispiel wurde anhand eines Beispiels erklärt, bei welchem eine Abstreiflamelle 3c aus vier Segmenten besteht und gewisse Innen- bzw. Außendurchmesser angenommen wurden. Dieses Beispiel dient lediglich zur Erläuterung der Funktionsweise einer Abstreiflamelle 3c, bei welcher die Enden der Segmente abgeschrägt gestaltet sind. Insbesondere die Werte von r und R sind für das Verständnis der Erfindung unerheblich und dienen lediglich der Vollständigkeit der Erklärung.

Im Folgenden werden Abwandlungen des zweiten Ausführungsbeispiels erläutert, die vorteilhafte Weiterentwicklungen der Erfindung darstellen, die insbesondere die Wirkung der Erfindung weitergehend verbessern.

Die im Ausführungsbeispiel dargestellte Abstreiflamelle 3c besteht aus vier Segmenten. Jedoch kann die Abstreiflamelle 3c auch mit zwei Segmenten, drei Segmenten oder mehr als vier Segmenten ausgeführt werden. Ferner können Innendurchmesser und Außendurchmesser der Abstreiflamelle, die aus den Segmenten besteht, an den Anwendungsfall angepasst werden.

Gemäß dem Grundkonzept der vorliegenden Erfindung besteht die Abstreiflamelle 3c aus einer Anzahl von Segmenten, die durch Lamellenunterbrechungen in Umfangsrichtung gebildet werden, wobei die Endflächen S der Segmente der Abstreiflamelle 3c, die die Lamellenunterbrechungen begrenzen, relativ zur radialen Richtung der Abstreiflamelle 3c abgeschrägt sind, um eine durch Abnutzung bedingte Änderung einer Abstreiffläche der Abstreiflamelle 3c zumindest teilweise auszugleichen.

Gemäß dem Grundkonzept der vorliegenden Erfindung kann der Winkel $\eta$, der zwischen der Endfläche S des Segments der Abstreiflamelle 3c und einer Tangente T liegt, die an einem Punkt aufgetragen ist, der am Innenumfang der Abstreiflamelle 3c und am Ende des Segments liegt, mit der vorstehend diskutierten geometrischen Überlegung zu $n = \eta_{konz}$ bestimmt werden.

Diese Berechnung ist ebenso für eine Abstreiflamelle möglich, die aus weniger oder mehr als vier Segmenten, bspw. 20 oder sogar mehr als 20 Segmenten besteht.

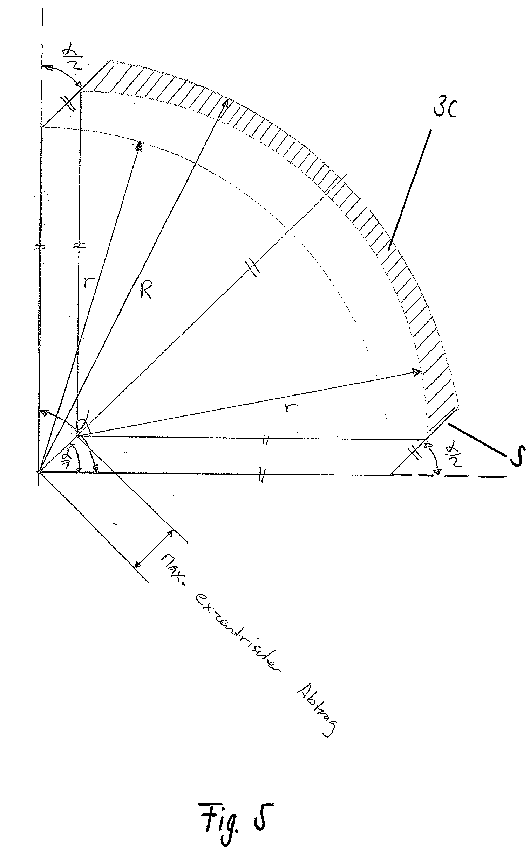

Eine besonders vorteilhafte Abwandlung des zweiten Ausführungsbeispiels wird unter Bezugnahme auf Fig. 5 beschrieben. In Fig. 5 ist schematisch dargestellt, welche geometrischen Verhältnisse sich bei exzentrischer Abnutzung der Abstreiflamelle 3c ergeben. Dazu ist in Fig. 5 der maximale exzentrische Abtrag ausgehend vom Zentrum der Abstreiflamelle eingezeichnet.

Der Bestimmung des Winkels $\eta_{konz}$ liegt nämlich, wie oben ersichtlich ist, eine konzentrische Abnutzung zu Grunde. In der Realität ergibt sich jedoch eine exzentrische Abnutzung am Innenumfang der Abstreiflamelle 3c im Gegensatz zu der theoretisch angenommenen konzentrischen Abnutzung.

Die folgende besonders vorteilhafte Abwandlung des zweiten Ausführungsbeispiels wird unter Bezugnahme auf Fig. 5 unter Berücksichtigung des oben angegebenen Sachverhalts der exzentrischen Abnutzung und unter Bezugnahme auf Fig. 3a, Fig. 3b und Fig. 4 beschrieben.

An dem in Fig. 3a, Fig. 3b und Fig. 4 gezeigten Beispiel wurde dargelegt, dass für eine Abstreiflamelle 3c, die aus vier Segmenten besteht, ein Winkel $\eta = \eta_{konz} = 51,9°$ optimal ist, um einer konzentrischen bzw. gleichmäßigen Abnutzung der Segmente der Abstreiflamelle 3c Rechnung zu tragen. Hierdurch werden durch die angenommene konzentrische Abnutzung die Umfangserstreckungen bzw. Bogenlängen b, B der Innenumfangsflächen der Segmente konstant gehalten.

Der vorliegenden Weiterbildung des zweiten Ausführungsbeispiels liegt die Annahme zu Grunde, dass eine exzentrische Abnutzung, die in der Wirklichkeit zu berücksichtigen ist, zur Optimierung der Funktion der Abstreiflamelle 3c andere Winkel zu Grunde legen muss, da die Krümmung am Innenumfang der Abstreiflamelle 3c bei exzentrischer Abnutzung nicht mit der Krümmung am Außenumfang übereinstimmt, wie in Fig. 5 gezeigt ist. Dabei kann in der Wirklichkeit die sich ergebende Geometrie zwischen derjenigen, die sich bei konzentrischer Abnutzung ergibt, und derjenigen liegen, die sich durch den in Fig. 5 gezeigten maximalen exzentrischen Abtrag ergibt. Hierbei haben die Erfinder herausgefunden, dass der Winkel $\eta$, der an der Abstreiflamelle 3c ausgebildet wird, bei Berücksichtigung der exzentrischen Abnutzung korrigiert werden muss. Für das Beispiel der Abstreiflamelle, die aus vier Segmenten besteht, ergab sich ein Winkel $n = \eta_{konz} = 51,9°$, wohingegen die Erfinder bestätigt haben, dass die beste Funktion für eine exzentrische Abnutzung der Abstreiflamelle von $n = 45°$ zur Verfügung gestellt werden kann. Hieraus ergibt sich, dass der theoretisch berechenbare Winkel $\eta_{konz}$, der sich aus der konzentrischen Abnutzung ergibt, korrigiert werden kann, um die Funktion der Abstreiflamelle zu verbessern. Aus dieser Überlegung wird gemäß der vorliegenden Weiterbildung des zweiten Ausführungsbeispiels ein Korrekturfaktor k zur Verfügung gestellt, mit dem der Winkel $\eta_{konz}$ multipliziert werden muss, so dass ein korrigierter Winkel $\eta_{ex}$ erhalten wird, der die maximal mögliche exzentrische Abnutzung der Abstreiflamelle berücksichtigt.

Der Korrekturfaktor für den Fall einer Abstreiflamelle, die aus vier Segmenten besteht, beträgt k = 0,868, wobei hierzu eine extrem exzentrische Abnutzung der Abstreiflamelle 3c zugrunde gelegt ist. Weitere Überlegungen der Optimierung der Abstreiflamelle haben ergeben, dass der Korrekturfaktor k immer kleiner als 1 ist. Im Folgenden ist eine Tabelle 1 dargestellt, die die Ergebnisse der Erkenntnisse zu den Korrekturfaktoren k in Abhängigkeit von der Anzahl der Segmente darlegt. Dabei ist sind die Segmentanzahl, sich daraus ergebende Winkel $\alpha$ und $\beta$ den Werten für $\eta_{konz}$ gegenübergestellt, die sich bei konzentrischer Abnutzung an der Abstreiflamelle ergeben. Ferner sind der Korrekturfaktor k und der sich ergebende korrigierte Wert $\eta_{ex}$ aufgetragen.

Tabelle 1:

| Segmentanzahl | $\alpha$ | $\beta$ | $\eta_{konz}$ | $\eta_{ex}$ | k |
|---|---|---|---|---|---|
| 2 | 180 | 167,32 | 32,5 | 0 | 0,00000 |

(fortgesetzt)

| Segmentanzahl | $\alpha$ | $\beta$ | $\eta_{konz}$ | $\eta_{ex}$ | k |
|---|---|---|---|---|---|
| 3 | 120 | 11,55 | 43,7 | 30 | 0,68682 |
| 4 | 90 | 83,66 | 51,9 | 45 | 0,86782 |
| 5 | 72 | 66,93 | 57,9 | 54 | 0,93332 |
| 6 | 60 | 55,77 | 62,4 | 60 | 0,96210 |
| 7 | 51,4 | 47,81 | 65,8 | 64,3 | 0,97655 |
| 8 | 45 | 41,83 | 68,6 | 67,5 | 0,98454 |
| 9 | 40 | 37,18 | 70,8 | 70 | 0,98929 |
| 10 | 36 | 33,46 | 72,6 | 72 | 0,99229 |
| 11 | 32,7 | 30,42 | 74,1 | 73,6 | 0,99427 |
| 12 | 30,0 | 27,89 | 75,3 | 75,0 | 0,99563 |
| 13 | 27,7 | 25,74 | 76,4 | 76,2 | 0,99659 |
| 14 | 25,7 | 23,90 | 77,4 | 77,1 | 0,99729 |
| 15 | 24,0 | 22,31 | 78,2 | 78,0 | 0,99781 |
| 16 | 22,5 | 20,92 | 78,9 | 78,8 | 0,99821 |
| 17 | 21,2 | 19,69 | 79,5 | 79,4 | 0,99851 |
| 18 | 20,0 | 18,59 | 80,1 | 80,0 | 0,99876 |
| 19 | 18,9 | 17,61 | 80,6 | 80,05 | 0,99895 |
| 20 | 18,0 | 16,73 | 81,1 | 81,0 | 0,99910 |

Aus der Tabelle ist ersichtlich, dass für große Anzahlen von Segmenten, aus denen die Abstreiflamelle 3c besteht, der Korrekturfaktor k sich an den Wert von 1 annähert. Ferner zeigt sich, dass für eine Anzahl der Segmente von zwei der Korrekturfaktor k = 0 ist, so dass der korrigierte Winkel $\eta_{ex}$ = 0° beträgt. Für die exzentrische Abnutzung ergibt sich erfindungsgemäß ein korrigierter Winkel $\eta_{ex}$ von 0°, so dass die Endfläche S tangential zum Innenumfang der Abstreiflamelle 3c verläuft.

Somit ergibt sich

$$\eta_{ex} = \eta_{konz} \cdot k \qquad\qquad (7)$$

Es ist festzuhalten, dass die ermittelten Korrekturfaktoren k die Grenzen für die maximale exzentrische Abnutzung darstellen und in der Praxis ein Wert zwischen dem in der Tabelle angegebenen Wert von k und 1 gewählt werden kann, um die vorteilhafte Wirkung der Erfindung zu erhalten. Hieraus ergibt sich ein Wertebereich, in welchem die Funktion der Abstreiflamelle hinsichtlich der exzentrischen Abnutzung optimiert wird. In anderen Worten ist erfindungsgemäß eine Abstreiflamelle vorteilhaft, bei der Folgendes gilt:

$$\eta_{ex} \leq \eta \leq \eta_{konz} \qquad\qquad (8)$$

Drittes Ausführungsbeispiel

Im Folgenden wird ein drittes Ausführungsbeispiel der vorliegenden Erfindung beschrieben. Gemäß dem dritten Ausführungsbeispiel der vorliegenden Erfindung ist ein Abstreifring vorgesehen, der mindestens zwei Abstreiflamellen aufweist, wie im ersten Ausführungsbeispiel dargelegt ist. Dabei besteht der Abstreifring aus einem Trägerring 2, der aus mindestens zwei Segmenten besteht. Am Innenumfang des Trägerrings sind zwei axial beabstandete Abstreiflamellen 3d, 3e vorgesehen, die ebenfalls aus Segmenten bestehen. Der Trägerring 2 des dritten Ausführungsbeispiels, und insbesondere die Unterbrechungen A, die zwischen den Segmenten liegen, die den Trägerring 2 bilden, sind gemäß dem ersten Ausführungsbeispiel ausgebildet. Ferner sind gemäß dem dritten Ausführungsbeispiel die Abstreiflamellen 3d, 3e derart ausgebildet, wie im zweiten Ausführungsbeispiel unter Bezugnahme auf die Abstreiflamelle 3c beschrieben ist.

Hieraus ergibt sich ein besonders vorteilhafter Abstreifring, bei dem an jeder Unterbrechungen A des Trägerrings 2 in einer Projektion von der axialen Richtung des Trägerrings 2 die angrenzenden Segmente einander überschneiden. Die im ersten Ausführungsbeispiel dargestellten Abwandlungen können auch auf den Abstreifring des dritten Ausführungsbeispiels angewendet werden. Ergänzend zu dieser Ausgestaltung sind in dem Abstreifring des dritten Ausführungsbeispiels zwei aus Segmenten bestehende Abstreiflamellen 3d, 3e vorgesehen, die jeweils aus derselben Anzahl von Segmenten wie der Trägerring besteht. Dabei werden die Segmente der Abstreiflamellen 3d, 3e durch Lamellenunterbrechungen in Umfangsrichtung gebildet, wobei die Endflächen der Abstreiflamellen, die die Lamellenunterbrechungen begrenzen, relativ zur radialen Richtung der Abstreiflamellen abgeschrägt sind, um eine durch Abnutzung bedingte Änderung der Abstreifflüche der Abstreiflamelle zumindest teilweise auszugleichen.

Die im zweiten Ausführungsbeispiel dargestellten Abwandlungen der dort beschriebenen Abstreiflamelle 3c sind ebenso auf die zwei Abstreiflamellen 3d, 3e anwendbar, die im dritten Ausführungsbeispiel vorgesehen sind.

Insgesamt ergibt sich dadurch ein Abstreifring, bei dem die Funktion zum Abstreifen des an der zugeordneten Stange anhaftenden Fluids bei einer relativen Bewegung zwischen der zugeordneten Stange und dem Abstreifring weitergehend verbessert wird und nicht nur durch die Konstruktion der Unterbrechungen zwischen den Segmenten des Trägerrings 2, sondern ebenfalls durch die spezielle Konstruktion der Enden der Segmente der Abstreiflamellen 3d, 3e verhindert wird, dass bei relativer Bewegung zwischen der zugeordneten Stange und dem Abstreifring von einem Raum zu einem anderen Raum eingetragen wird, wobei die Räume durch den Abstreifring zu trennen sind.

Viertes Ausführungsbeispiel

Der Abstreifring, der im ersten bzw. dritten Ausführungsbeispiel beschrieben ist, und die Abstreiflamelle, die im zweiten Ausführungsbeispiel beschrieben ist, können in einer Stopfbuchse verwendet werden, die bspw. in einer Brennkraftmaschine eingebaut wird.

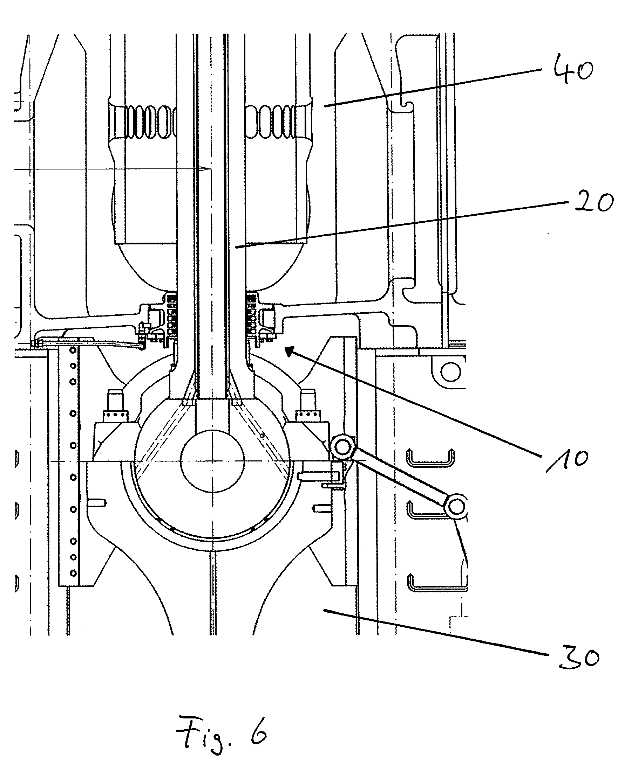

Fig. 6 zeigt eine Querschnittsansicht einer Brennkraftmaschine im Bereich des Kreuzkopfs mit einer Stopfbuchse 10 gemäß der vorliegenden Erfindung. Fig. 6 zeigt einen Kurbelraum 30 und einen Luftreceiverraum 40. Zur Trennung des Kurbelraums 30 und des Luftreceiverraums 40 ist in einer Trennwand die Stopfbuchse 10 vorgesehen. Die Stopfbuchse 10 ist konzentrisch um eine Kolbenstange 20 der Brennkraftmaschine angeordnet. Die Kolbenstange 20 ist beispielsweise über eine Kreuzkopfanordnung mit einer Kurbelwelle der Brennkraftmaschine verbunden. Die Kolbenstange 20 bewegt sich im Betrieb der Brennkraftmaschine in axialer Richtung relativ zu der Stopfbuchse 10.

In der Stopfbuchse 10 sind mehrere, z.B. vier, Abstreifringe 1 in axialer Richtung hintereinander eingesetzt, um das an der Kolbenstange 20 anhaftende Schmieröl, das im Bereich des Kurbelraums 30 auf die Kolbenstange 20 aufgebracht wird, abzustreifen und in den Kurbelraum 30 zurückzuführen. Hierdurch wird bewirkt, dass an der Kolbenstange 20 im Bereich des Luftreceiverraums 40 die Menge des an der Kolbenstange 20 anhaftenden Schmieröls minimiert wird und gleichzeitig eine Verschmutzung im Durchtrittsbereich vom Luftreceiverraum 40 zum Kurbelraum 30 minimiert werden kann.

Der in der Stopfbuchse 10 eingesetzte Abstreifring kann gemäß dem ersten Ausführungsbeispiel aufgebaut sein, so dass aufgrund der spezifischen Anordnung der Abschrägungen im Bereich der Unterbrechungen A zwischen den Segmenten, die den Trägerring 2 des Abstreifrings 1, 1a bilden, ein Durchtritt des an der Kolbenstange anhaftenden Schmieröls mit Hilfe von zwei axial beabstandeten Abstreiflamellen 3a, 3b minimiert werden kann.

Diese Funktion kann weitergehend durch einen Abstreifring verbessert werden, indem der Abstreifring zwei Abstreiflamellen 3c einsetzt, die im zweiten Ausführungsbeispiel beschrieben und als Abstreiflamellen 3d, 3e bezeichnet sind.

In einer optimierten Lösung weist die Stopfbuchse 10 des vierten Ausführungsbeispiels einen Abstreifring auf, der im dritten Ausführungsbeispiel definiert ist, bei dem sowohl die optimierte Gestaltung der Unterbrechungen zwischen den Segmenten des Trägerrings 2 also auch die Gestaltung der Enden der Segmente der Abstreiflamellen 3d, 3e zum Einsatz kommen.

Die Erfindung ist nicht auf die oben angegebenen Ausführungsbeispiele beschränkt. Insbesondere ist die Anwendung der Erfindung auf eine Stopfbuchse für eine Brennkraftmaschine lediglich ein Beispiel und entfaltet die Erfindung in allen Anwendungen ihre Wirkung, bei denen zwei Räume von einem Abstreifring zu trennen sind, wobei eine dem Abstreifring zugeordnete Stange von dem Abstreifring bei einer relativen Bewegung zwischen der zugeordneten Stange und dem Abstreifring überstrichen wird.

Die in den Ausführungsbeispielen angegebenen Anzahlen von Abstreiflamellen, Segmenten oder Abstreifringen für eine Stopfbuchse sind lediglich beispielhafter Natur und können entsprechend dem Anwendungsfall abgewandelt werden.

**Patentansprüche**

1. Abstreifring (1; 1a) zum Abstreifen einer Außenfläche einer axial relativ zum Abstreifring beweglichen Stange, wobei der Abstreifring (1; 1a) einen Trägerring (2), der aus mindestens zwei durch Unterbrechungen (A) im Trägerring (2) getrennten Segmenten (2a, 2b, 2c, 2d) besteht, und mindestens zwei am Innenumfang des Trägerrings (2) angeordnete Abstreiflamellen (3a, 3b; 3c; 3d, 3e) aufweist, wobei an jeder der Unterbrechungen (A) des Trägerrings (2) in einer Projektion von der axialen Richtung des Trägerrings (2) die Segmente (2a, 2b, 2c, 2d) aneinander angrenzen und die Abstreiflamelle (3c) aus einer entsprechenden Anzahl von Segmenten besteht, die durch Lamellenunterbrechungen (B; C) in Umfangsrichtung gebildet werden, wobei die Anzahl und Position der Lamellenunterbrechungen (B, C) jeder Abstreiflamelle (3c) an Anzahl und Position der Unterbrechungen (A) des Trägerrings (2) angepasst sind und die Endflächen (S) der Abstreiflamellen (3c), die die Lamellenunterbrechungen (B; C) begrenzen, relativ zur radialen Richtung der Abstreiflamelle (3c) abgeschrägt sind, um eine durch Abnutzung bedingte Änderung einer Abstreiffläche der Abstreiflamelle (3c) zumindest teilweise auszugleichen, wobei zwischen der Endfläche (S) und einer Tangente (T), die an einem Punkt aufgetragen ist, der am Innenumfang der Abstreiflamelle (3c) und am Ende des Segments liegt, ein Abschrägungswinkel (n) im Bereich von weniger als 90° vorgesehen ist, und der Abschrägungswinkel ($\eta$) kleiner als einem sich bei konzentrischer Abnutzung ergebenden theoretischen Abschrägungswinkel ($\eta_{konz}$) festgelegt ist.

2. Abstreifring (1; 1a) nach Anspruch 1, wobei an jeder der Unterbrechungen (A) des Trägerrings (2) Endflächen der angrenzenden Segmente relativ zur axialen Richtung des Trägerrings (2) abgeschrägt sind und/oder gestuft ausgebildet sind.

3. Abstreifring (1) nach Anspruch 1 oder 2, wobei die mindestens zwei Abstreiflamellen (3a, 3b; 3c; 3d, 3e) in axialer Richtung des Trägerrings (2) voneinander beabstandet angeordnet sind und jede der Abstreiflamellen (3a, 3b; 3c; 3d, 3e) im Umfangsbereich von jeder der Unterbrechungen (A) des Trägerrings (2) eine Lamellenunterbrechung (B, C) aufweist.

4. Abstreifring (1; 1a) nach einem der Ansprüche 1 bis 3, wobei der Abstreifring (1; 1a) in an der Stange montiertem Zustand durch eine am Abstreifring (1; 1a) wirkende Vorspanneinrichtung (4) vorgespannt ist, so dass Innenumfangsflächen der Abstreiflamellen (3a, 3b; 3c; 3d, 3e) in Kontakt mit der Außenfläche der Stange gehalten werden.

5. Abstreiflamelle (3c) nach einem der Ansprüche 1 bis 4 zur Montage am Innenumfang eines aus mindestens zwei Segmenten bestehenden Abstreifrings (1; 1a; 1b), wobei ein korrigierter Abschrägungswinkel ($\eta_{ex}$) durch Multiplikation eines theoretischen Abschrägungswinkels ($\eta_{konz}$), der unter der Annahme einer konzentrischen Abnutzung am Innenumfang der Abstreiflamelle (3c) berechnet wird, mit einem Korrekturfaktor (k) festgelegt wird, wobei der Korrekturfaktor (k) eine exzentrische Abnutzung am Innenumfang der Abstreiflamelle (3c) berücksichtigt, und wobei der Abschrägungswinkel ($\eta$), der an der Abstreiflamelle (3c) vorgesehen ist, gleich dem korrigierten Abschrägungswinkel ($\eta_{ex}$) ist.

6. Abstreiflamelle (3c) nach Anspruch 5, wobei der Abschrägungswinkel ($\eta$), der an der Abstreiflamelle (3c) vorgesehen ist, größer oder gleich dem korrigierten Abschrägungswinkel ($\eta_{ex}$) und kleiner oder gleich dem theoretischen Abschrägungswinkel ($\eta_{konz}$) ist.

7. Abstreiflamelle nach Anspruch 5 oder 6, wobei der Korrekturfaktor (k) unter Berücksichtigung des Abstands der die Abstreiflamelle (3c) bildenden Segmente in Umfangsrichtung der Abstreiflamelle (3c) festgelegt wird.

8. Stopfbuchse (10) einer Brennkraftmaschine, insbesondere eines Zweitakt-Großdieselmotors mit mindestens einem Zylinder, in welchem ein Kolben hin- und herbewegbar angeordnet ist, der mittels einer als Kolbenstange ausgebildeten Stange (20) mit einem Kreuzkopf verbunden ist, wobei die Stopfbuchse (10) der Durchführung der Stange (20) von einem Luftreceiverraum (40) in einen Kurbelraum (30) dient, wobei die Stopfbuchse (10) mindestens einen Abstreifring (1; 1a) nach einem der Ansprüche 1-4 aufweist.

9. Stopfbuchse (10) nach Anspruch 8, wobei eine Vorspanneinrichtung (4) am Außenumfang des Trägerrings (2) vorgesehen ist, der die am Innenumfang des Trägerrings (2) vorgesehenen Abstreiflamellen (3a, 3b; 3c; 3d, 3e) gegen die Außenfläche der Stange (20) spannt, so dass bei gradueller Abnutzung der Abstreiflamellen die Innenflächen derselben durch die Vorspanneinrichtung (4) in Kontakt mit der Außenfläche der Stange (20) gehalten werden.

10. Brennkraftmaschine, insbesondere Zweitakt-Großdieselmotor, mit einer Kolbenstange (20), an der zur Durchführung der Kolbenstange (20) von einem Luftreceiverraum (40) in einen Kurbelraum (30) eine Stopfbuchse (10) nach Anspruch 8 oder 9 vorgesehen ist.

**Claims**

1. Scraper ring (1; 1a) for scraping an outer surface of a rod that is movable axially relative to the scraper ring, wherein the scraper ring (1; 1a) has a carrier ring (2), which consists of at least two segments (2a, 2b, 2c, 2d) that are separated by interruptions (A) in the carrier ring (2), and of at least two scraper blades (3a, 3b; 3c; 3d, 3e) arranged on the inner circumference of the carrier ring (2), wherein the segments (2a, 2b, 2c, 2d) adjoin one another at each of the interruptions (A) in the carrier ring (2) in a projection from the axial direction of the carrier ring (2), and the scraper blade (3c) consists of a corresponding number of segments which are formed by blade interruptions (B; C) in the circumferential direction, wherein the number and position of the blade interruptions (B, C) in each scraper blade (3c) are adapted to the number and position of the interruptions (A) in the carrier ring (2) and the end faces (S) of the scraper blades (3c), which delimit the blade interruptions (B; C), are slanted relative to the radial direction of the scraper blade (3c) in order to at least partially compensate for a wear-induced change in a scraper surface of the scraper blade (3c), wherein a slant angle ($\eta$) in the range of less than 90° is provided between the end face (S) and a tangent (T) which is drawn at a point that is located on the inner circumference of the scraper blade (3c) and at the end of the segment, and the slant angle ($\eta$) is defined to be smaller than a theoretical slant angle ($\eta_{conc}$) that arises in the case of concentric wear.

2. Scraper ring (1; 1a) according to Claim 1, wherein, at each of the interruptions (A) in the carrier ring (2), end faces of the adjoining segments are slanted relative to the axial direction of the carrier ring (2) and/or are configured in a stepped manner.

3. Scraper ring (1) according to Claim 1 or 2, wherein the at least two scraper blades (3a, 3b; 3c; 3d, 3e) are arranged in a manner spaced apart from one another in the axial direction of the carrier ring (2) and each of the scraper blades (3a, 3b; 3c; 3d, 3e) has a blade interruption (B, C) in the circumferential region of each of the interruptions (A) in the carrier ring (2).

4. Scraper ring (1; 1a) according to one of Claims 1 to 3, wherein the scraper ring (1; 1a) is pretensioned in a state mounted on the rod by a pretensioning device (4) acting on the scraper ring (1; 1a), such that inner circumferential surfaces of the scraper blades (3a, 3b; 3c; 3d, 3e) are kept in contact with the outer surface of the rod.

5. Scraper blade (3c) according to one of Claims 1 to 4 for mounting on the inner circumference of a scraper ring (1; 1a; 1b) that consists of at least two segments, wherein a corrected slant angle ($\eta_{ex}$) is defined by multiplication of a theoretical slant angle ($\eta_{conc}$), which is calculated assuming concentric wear on the inner circumference of the scraper blade (3c), with a correction factor (k), wherein the correction factor (k) takes into account eccentric wear on the inner circumference of the scraper blade (3c), and wherein the slant angle ($\eta$) which is provided on the scraper blade (3c) is equal to the corrected slant angle ($\eta_{ex}$).

6. Scraper blade (3c) according to Claim 5, wherein the slant angle ($\eta$) which is provided on the scraper blade (3c) is greater than or equal to the corrected slant angle ($\eta_{ex}$) and less than or equal to the theoretical slant angle ($\eta_{conc}$).

7. Scraper blade according to Claim 5 or 6, wherein the correction factor (k) is defined taking into account the spacing of the segments, forming the scraper blade (3c), in the circumferential direction of the scraper blade (3c).

8. Stuffing box (10) of an internal combustion engine, in particular of a two-stroke large diesel engine having at least one cylinder, in which a piston is arranged so as to be movable back and forth, said piston being connected to a crosshead by means of a rod (20) configured as a piston rod, wherein the stuffing box (10) serves to feed the rod (20) through from an air receiver chamber (40) into a crank chamber (30), wherein the stuffing box (10) has at least one scraper ring (1; 1a) according to one of Claims 1-4.

9. Stuffing box (10) according to Claim 8, wherein a pretensioning device (4) is provided on the outer circumference of the carrier ring (2), which tensions the scraper blades (3a, 3b; 3c; 3d, 3e) provided on the inner circumference of the carrier ring (2) against the outer surface of the rod (20), such that with gradual wear to the scraper blades, the inner surfaces thereof are kept in contact with the outer surface of the rod (20) by the pretensioning device (4).

**10.** Internal combustion engine, in particular two-stroke large diesel engine, having a piston rod (20) on which a stuffing box (10) according to Claim 8 or 9 for feeding the piston rod (20) through from an air receiver chamber (40) into a crank chamber (30) is provided.

**Revendications**

**1.** Bague de raclage (1 ; 1a) pour le raclage d'une surface extérieure d'une tige mobile axialement par rapport à la bague de raclage, la bague de raclage (1 ; 1a) présentant une bague de support (2) qui se compose d'au moins deux segments (2a, 2b, 2c, 2d) séparés par des interruptions (A) dans la bague de support (2) et d'au moins deux lamelles de raclage (3a, 3b ; 3c ; 3d, 3e) disposées sur la périphérie intérieure de la bague de support (2), les segments (2a, 2b, 2c, 2d) étant adjacents les uns aux autres au niveau de chacune des interruptions (A) de la bague de support (2) en projection depuis la direction axiale de la bague de support (2) et la lamelle de raclage (3c) se composant d'un nombre correspondant de segments qui sont formés par les interruptions de lamelles (B ; C) dans la direction périphérique, le nombre et la position des interruptions de lamelles (B, C) de chaque lamelle de raclage (3c) étant adaptés au nombre et à la position des interruptions (A) de la bague de support (2) et les surfaces d'extrémité (S) des lamelles de raclage (3c), qui délimitent les interruptions de lamelles (B ; C), étant biseautées par rapport à la direction radiale de la lamelle de raclage (3c) afin de compenser au moins en partie une variation causée par l'usure d'une surface de raclage de la lamelle de raclage (3c), un angle de biseautage ($\eta$) dans une plage inférieure à 90° étant prévu entre la surface d'extrémité (S) et une tangente (T) en un point situé sur la périphérie intérieure de la lamelle de raclage (3c) et à l'extrémité du segment, et l'angle de biseautage ($\eta$) étant fixé comme étant inférieur à un angle de biseautage théorique ($\eta_{konz}$) produit lors d'une usure concentrique.

**2.** Bague de raclage (1 ; 1a) selon la revendication 1, dans laquelle, au niveau de chacune des interruptions (A) de la bague de support (2), des surfaces d'extrémité des segments adjacents sont biseautées et/ou sont réalisées sous forme étagée par rapport à la direction axiale de la bague de support (2).

**3.** Bague de raclage (1) selon la revendication 1 ou 2, dans laquelle les au moins deux lamelles de raclage (3a, 3b ; 3c ; 3d, 3e) sont disposées de manière espacée les unes des autres dans la direction axiale de la bague de support (2) et chacune des lamelles de raclage (3a, 3b ; 3c ; 3d, 3e) présente une interruption de lamelle (B, C) dans la région périphérique de chacune des interruptions (A) de la bague de support (2).

**4.** Bague de raclage (1 ; 1a) selon l'une quelconque des revendications 1 à 3, dans laquelle la bague de raclage (1 ; 1a) est précontrainte dans l'état monté sur la tige par un dispositif de précontrainte (4) agissant sur la bague de raclage (1 ; 1a) de telle sorte que des surfaces périphérique intérieures des lamelles de raclage (3a, 3b ; 3c ; 3d, 3e) soient maintenues en contact avec la surface extérieure de la tige.

**5.** Lamelle de raclage (3c) selon l'une quelconque des revendications 1 à 4 pour le montage sur la périphérie intérieure d'une bague de raclage (1 ; 1a ; 1b) constituée d'au moins deux segments, un angle de biseautage corrigé ($\eta_{ex}$) étant fixé par multiplication d'un angle de biseautage théorique ($\eta_{konz}$), qui est calculé en supposant une usure concentrique au niveau de la périphérie intérieure de la lamelle de raclage (3c), par un facteur de correction (k), le facteur de correction (k) tenant compte d'une usure excentrique au niveau de la périphérie intérieure de la lamelle de raclage (3c) et l'angle de biseautage ($\eta$) prévu au niveau de la lamelle de raclage (3c) étant égal à l'angle de biseautage corrigé ($\eta_{ex}$).

**6.** Lamelle de raclage (3c) selon la revendication 5, dans laquelle l'angle de biseautage ($\eta$) qui est prévu au niveau de la lamelle de raclage (3c) est supérieur ou égal à l'angle de biseautage corrigé ($\eta_{ex}$) et est inférieur ou égal à l'angle de biseautage théorique ($\eta_{konz}$).

**7.** Lamelle de raclage selon la revendication 5 ou 6, dans laquelle le facteur de correction (k) est fixé en tenant compte de la distance des segments formant la lamelle de raclage (3c) dans la direction périphérique de la lamelle de raclage (3c).

**8.** Presse-étoupe (10) d'un moteur à combustion interne, en particulier d'un gros moteur diesel à deux temps, comprenant au moins un cylindre dans lequel est disposé un piston déplaçable en va et vient, qui est connecté au moyen d'une tige (20) réalisée sous forme de tige de piston à une tête cruciforme, le presse-étoupe (10) servant au passage de la tige (20) depuis un espace recevant de l'air (40) dans un espace de vilebrequin (30), le presse-étoupe (10) présentant au moins une bague de raclage (1 ; 1a) selon l'une quelconque des revendications 1 à 4.

**9.** Presse-étoupe (10) selon la revendication 8, dans lequel un dispositif de précontrainte (4) est prévu au niveau de la périphérie extérieure de la bague de support (2), lequel serre les lamelles de raclage (3a, 3b ; 3c ; 3d, 3e) prévues sur la périphérie intérieure de la bague de support (2) contre la surface extérieure de la tige (20) de telle sorte que lors d'une usure graduelle des lamelles de raclage, les surfaces intérieures de celles-ci soient maintenues en contact avec la surface extérieure de la tige (20) par le dispositif de précontrainte (4).

**10.** Moteur à combustion interne, en particulier gros moteur diesel à deux temps, comprenant une tige de piston (20) au niveau de laquelle est prévu un presse-étoupe (10) selon la revendication 8 ou 9 pour le passage de la tige de piston (20) d'un espace recevant de l'air (40) dans un espace de vilebrequin (30).

Fig. 1

Fig. 2

Fig. 3a

Fig. 3b

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2719743 A
- EP 0318349 A1

- WO 9213217 A